# EUROPEAN PATENT SPECIFICATION

(11) **EP 2 230 539 B1**
(45) Date of publication and mention of the grant of the patent: **04.12.2019**
(21) Application number: 10156660.2
(22) Date of filing: 16.03.2010
(51) Int. Cl.: G02B 5/28, B44F 1/08, G02B 5/20, G07D 7/00

(54) **Patterning of a spacer layer in an interference filter**
Ausformung einer Abstandsschicht in einem Interferenzfilter
Formation de motifs dans une couche d'espaceur dans un filtre d'interférence

(30) Priority: 19.03.2009 US 161520 P
(43) Date of publication of application: 22.09.2010
(60) Divisional application: 19203536.8
(73) Proprietor: Viavi Solutions Inc., San Jose, CA 95002 (US)
(72) Inventor: ARGOITIA, Alberto, Santa Rosa, CA 95405 (US); LADEN, Patrick, Petaluma, CA 95954 (US); THORAVAL, Carole, Santa Rosa, CA 95405 (US)
(74) Representative: Murgitroyd & Company

(56) References cited:
- EP-A1- 1 592 067
- WO-A1-2005/038136
- DE-A1- 3 715 640
- US-A- 4 242 378
- US-A- 6 010 751

## Description

### TECHNICAL FIELD

The present invention relates to optical interference filters for providing a color shift effect and, more particularly, to optical filters with a dielectric spacer layer such that different regions thereof have different thicknesses.

### BACKGROUND OF THE INVENTION

It is well known that interference effects provided by thin film layered coatings depend, in particular, on the thickness of the layers. Accordingly, various interference structures have been suggested where at least one layer has a varying thickness in order to modify the effect provided by the structure.

By way of example, U.S. Patent No. 5,009,486 in the name of Dobrowolski et al. teaches a form depicting coating with a marginal portion which decreases in thickness so as to provide a multi-colored aureole around the form.

Various methods of forming thin film layers with variations of thickness have been developed, such as masked deposition or polymerizing a monomer to different degrees for varying the shrinkage of the film and hence the thickness of the film.

The mechanical masking technique is difficult to use in mass production and is associated with additional cost. Even for a simple pattern of continuous coated and non-coated bands, it requires a system, conventionally driven by a belt, where shadowing strips run continuously between a coating material source and a water cooled drum which supports a moving substrate to be patterned. Strips on this roller system match in width with non-coated bands on the substrate. Even this simple system presents problems when a coating material is evaporated. Over the time, the build up on the strips creates edge definition problem. Additionally, due to the high temperature, dimensions of the strips tend to change. The change in dimensions has to be compensated by a difference in the tension applied to the strips. This result in significant cost associated with the masking technique.

U.S. Patent No. 6,010,751 in the name of Shaw et al. teaches a dielectric layer formed by evaporating an acrylate monomer. The acrylate condenses on the substrate and is polymerized in situ for forming a monolithic film. Different areas of the film may have different thicknesses formed by using a mask between a heated drum and the film.

International application WO2005038136 in the name of Heim et al. teaches an interference structure with a polymeric dielectric layer modified by elongation, electromagnetic radiation, electron beam treatment, pressure and/or temperature. EP1592067A1 discloses a manufacturing method of a solid state imaging device including a filter unit using a number of formation steps and removal steps in a batch process.

None of the conventional methods provides a solution that is both a cost effective and environmentally friendly.

These methods do not provide two adjacent regions each having a predetermined thickness in accordance with the design requirements and a well defined border therebetween. By way of example, Shaw '751 describes a sample which has a star image surrounded by a halo which gradually changes its color.

An object of the present invention is to overcome the shortcomings of the prior art and to provide a method of forming an interference filter with two adjacent regions each having a predetermined thickness.

### SUMMARY OF THE INVENTION

Accordingly, the present invention relates to a method of manufacturing an optical device, the method comprising:
(a) coating a substrate with one of a reflector or absorber layer;
(b) providing a spacer layer onto the layer coated in step (a), the spacer layer comprising a spacer material and a first soluble pocket within the spacer layer, by providing a first portion of the spacer material, then providing the first soluble pocket, then providing a second portion of the spacer material;
(c) modifying the spacer layer by dissolving the first soluble pocket and removing a portion of the spacer material so as to vary the thickness of the spacer layer; and,
(d) coating the spacer layer with a metal absorber layer;
characterised in that the first soluble pocket is provided by printing, and that the metal absorber layer is deposited in a layer that is sufficiently thin so as to allow substantial transmission of light through said layer.

The invention also relates to the above method of manufacturing an optical device, the method further comprising: (a) coating a substrate with a first absorber layer; (b) providing a spacer layer onto the first absorber layer, the spacer layer comprising a spacer material and a soluble pocket within the loaded spacer layer; (c) modifying the spacer layer by dissolving the soluble pocket so as to remove a portion of the spacer material and to vary the thickness of the spacer layer; and, (d) coating the spacer layer with a second absorber layer.

### BRIEF DESCRIPTION OF THE DRAWINGS

The invention will be described in greater detail with reference to the accompanying drawings which represent preferred embodiments thereof, wherein:
Figure 1 is a flowchart of a method of manufacturing an optical device;
Figure 2 is a diagram illustrating the method of Fig. 1;
Figure 3 is a diagram illustrating the method of Fig. 1;
Figure 4 is a schematic illustration of an apparatus utilized for accomplishing wet stripping;
Figure 5 illustrates color shifting effects produced by the device of Example 1;
Figure 6 is a plot of reflectance as a function of wavelengths of the two color shifting areas, Example 1;
Figure 7 is a plot of color trajectories, Example 1;
Figure 8 is a diagram illustrating one embodiment of the invention;
Figure 9 is a diagram illustrating an illustrative example;
Figure 10 is a flowchart of one embodiment of the method of the invention;
Figure 11 is a flowchart of another method;
Figure 12 is a diagram illustrating the method of Fig. 11;
Figure 13 is a diagram illustrating the method of Fig. 11; and,
Figure 14 is a diagram illustrating one embodiment of the invention.

### DETAILED DESCRIPTION

Fig. 1 provides a flowchart of a method of manufacturing an optical device, which includes a substrate coating step 110, a loaded spacer step 120, a modifying step 130, and a third layer step 140.

With reference to Fig. 2, during the substrate coating step 110, a substrate 11 is at least partially coated with a reflector layer 20. Prior to this step, the substrate 11 may be coated with other layers, such as a release layer or printed ink information (not shown in Fig. 2). The release layer is a layer allowing to transfer all coatings from the foil substrate to another substrate, for example a security document or authentication document.

In the loaded spacer step 120, a spacer layer 60 is provided onto the reflector layer 20. The spacer layer 60 includes a first portion of spacer material 30, a second portion of spacer material 50, and a soluble pocket 40 within the spacer layer 60; the pocket 40 is disposed between the spacer material portions 30 and 50.

The first portion of spacer material 30 is deposited onto the reflector layer 20; then a soluble material is patterned thereon, by way of example using an ink-jet printer, so as to partially cover the spacer material 30 with a soluble pocket 40. Subsequently, the second portion of spacer material 50 is deposited so as to at least partially cover the soluble pocket 40 and the previously deposited spacer material 30. It would be appreciated that the figures are schematic representation of the embodiments and not all the details are shown. In particular, the top surface of the spacer material 50 is not flat because of the conforming effect.

With reference to Fig. 3, in the modifying step 130, the spacer layer 60 is modified by dissolving the soluble pocket 40 in a solvent so as to remove a portion of the spacer material 45, which was deposited on top of the soluble pocket 40. The dissolution of the pocket 40 and removal of the spacer material 45 provides a spacer layer 65 which has a varying layer thickness illustrated in Fig. 3 as h₁ and h₂ in adjacent regions 85 and 80, respectively.

In the third layer step 140, the spacer layer 65 is coated with an absorber layer 70 so as to complete forming an interference optical filter 100. The absorber layer 70 may be further coated with a release layer, a protective layer, a dry adhesive layer, printed ink information, etc.

The resulting device includes the interference optical filter 100, wherein the thickness of the spacer layer 65 varies from one region to another. The thicknesses h₁ and h₂ of the spacer layer 65 may be chosen so as to provide two different optical effects to an observer 90, who would observe at least two adjacent regions, marked in Fig. 3 as regions 80 and 85, with a well defined border therebetween.

The substrate 11 may include such materials as glass, mica, alumina, iron oxide, graphite, bismuth oxychloride, boron nitride, polymer or metal or similar particle. The substrate 11 may be a piece of paper, cardboard, textile, foil, polymer sheet, metal.

Examples of suitable reflector material for the reflector layer 20 preferably a metal with a reflectance of greater than 70%; suitable materials include aluminum, silver, iron, tantalum, iridium, rhenium, copper, silver, gold, platinum, palladium, nickel, cobalt, niobium, chromium, tin, and combinations or alloys.

The reflector layer 20 may be a patterned or segmented reflector layer with windows absent the reflective material. Various techniques may be used to pattern the metal layer, such as chemical etching or oil ablation in vacuum.

Suitable materials for the spacer layer 65 include zinc sulfide (ZnS), zinc oxide (ZnO), zirconium oxide (ZrO₂), titanium dioxide (TiO₂), diamond-like carbon, indium oxide (In₂O₃), indium-tin-oxide ("ITO"), tantalum pentoxide (Ta₂O₅), ceric oxide (CeO₂), yttrium oxide (Y₂O₃), europium oxide (Eu₂O₃), iron oxides such as (II)diiron(III) oxide (Fe₃O₄) and ferric oxide (Fe₂O₃), hafnium nitride (HfN), hafnium carbide (HfC), hafnium oxide (HfO₂), lanthanum oxide (La₂O₃), magnesium oxide (MgO), neodymium oxide (Nd₂O₃), praseodymium oxide (Pr₆O₁₁), samarium oxide (Sm₂O₃), antimony trioxide (Sb₂O₃), silicon (Si), silicon monoxide (SiO), germanium (Ge), selenium trioxide (Se₂O₃), tin oxide (SnO₂), tungsten trioxide (WO₃), silicon dioxide (SiO₂), aluminum oxide (Al₂O₃), metal fluorides such as magnesium fluoride (MgF₂), aluminum fluoride (AlF₃), cerium fluoride (CeF₃), lanthanum fluoride (LaF₃), sodium aluminum fluorides (e.g., Na₃AlF₆ or Na₅Al₃F₁₄), neodymium fluoride (NdF₃), samarium fluoride (SmF₃), barium fluoride (BaF₂), calcium fluoride (CaF₂), lithium fluoride (LiF), and combinations thereof, and organic monomers and polymers including dienes or alkenes such as acrylates (e.g., methacrylate), perfluoroalkenes, polytetrafluoroethylene (e.g., TEFLON.RTM.), fluorinated ethylene propylene ("FEP"), combinations thereof, and the like.

Examples of suitable absorber materials for the absorber layer 70 include chromium, nickel, iron, titanium, aluminum, tungsten, molybdenum, niobium, combinations, compounds or alloys thereof, such as INCONEL.TM. (Ni--Cr--Fe), metals mixed in a dielectric matrix. Metal absorber layers are generally deposited in a layer that is sufficiently thin so as to allow substantial transmission of light through the absorber layer.

Typically, the thin film layers, such as the reflector layer 20, spacer layer 65, and absorber layer 70, can be deposited using any conventional thin film deposition techniques. Nonlimiting examples of such techniques include physical vapor deposition (PVD), chemical vapor deposition (CVD), plasma enhanced (PE) variations thereof, such as PECVD or downstream PECVD, sputtering, electrolytic deposition, sol-gel, and other like deposition methods that lead to the formation of substantially uniform continuous thin film layers. The release layer may be coated using the aforementioned methods or other non vacuum processes such as gravure, wire wound bars, flexographic applications.

For the soluble pocket 40, various materials may be used which may be dissolved by the solvent used in the modifying step 130 to dissolve the pocket 40. By way of example, watersoluble materials, such as polyvinylpyrolidone, can be used in combination with a water-based solvent. Typically this material is deposited to a thickness ranging from 0.2 to 2 mils. Where it is desired to utilize a solvent other than water, the soluble pocket 40 can be formed of other materials such a wax, acrylic polyamide, polyamide, urethane or epoxy which are dissolved in organic solvents such as methylethyl ketones, acetones, alcohol and the like.

Other polymers that can be used as binders for soluble inks, paints and coatings include polyvinyl alcohol, polyvinyl acetate polyvinylpyrrolidone, poly(ethoxyethylene), poly(methoxyethylene), poly(acrylic) acid, poly(acrylamide), poly(oxyethylene), poly(maleic anhydride), hydroxyethyl cellulose, cellulose acetate, poly(sacchrides) such as gum arabic and pectin, poly(acetals), such as polyvinylbutyral, poly(vinyl halides), such as polyvinyl chloride and polyvinylene chloride, poly(dienes) such as polybutadiene, poly(alkenes) such as polyethylene, poly(acrylates) such as polymethyl acrylate, poly(methacrylates) such as poly methylmethacrylate, poly(carbonates) such as poly(oxycarbonyl oxyhexamethylene, poly(esters) such as polyethylene terephthalate, poly(urethanes), poly(siloxanes), poly(suphides), poly(sulphones), poly(vinylnitriles), poly(acrylonitriles), poly(styrene), poly(phenylenes) such as poly(2,5 dihydroxy-1,4-phenyleneethylene), poly(amides), natural rubbers, formaldahyde resins and other polymers.

In addition, other inks or coatings can be formulated to be soluble on acidic or base solutions for other possible convenient applications.

The soluble material of the soluble pocket 40 can be applied using any printing technique, such as gravure, flexographic, offset, letterpress, laser toner, inkjet, or screen printing. Alternatively, the soluble pocket 40 is applied using a painting step, such as rolling, dipping, brushing, or spray painting. By way of example, fingerprints or personal signatures made with a special ink may render color shifting and different from the background; a pattern can be , the soluble material can be also applied with a rubber stamp.

Registration of the printed inks gives a large combination of different color shifting effects, transparent windows, non-color shifting background, etc.

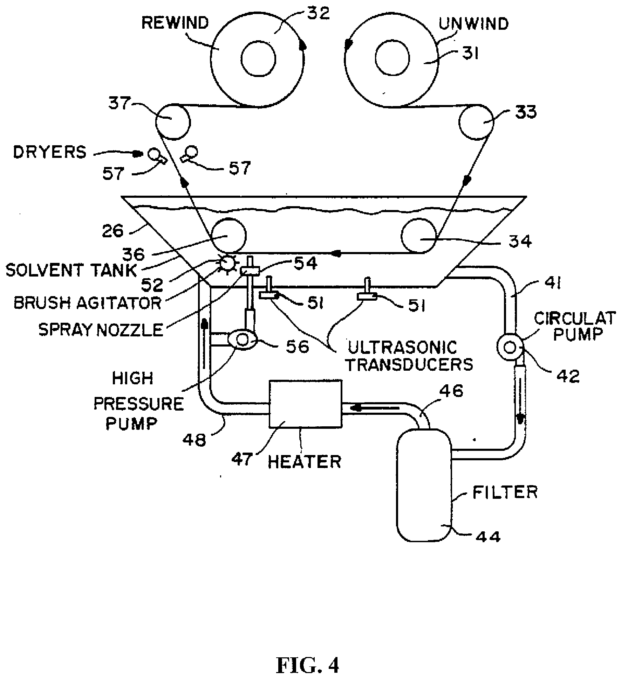

The soluble pocket 40 may be removed using a stripping apparatus shown in Fig. 4.

In the stripping apparatus 24 shown in Fig. 4, the substrate 11 is carried by unwind and rewind reels 31 and 32. The flexible substrate 11 passes from the rewind reel 31 over a roller 33 and then below a roller 34 which is immersed in the solvent carried within the tank 26. The substrate 11 then passes from the roller 34 to the roller 36 and remains in the solvent for a sufficient period of time so that the solvent can dissolve the soluble pocket40. Thereafter, the substrate 11 passes over a roller 37 and is rewound onto the rewind reel 32.

Means is provided for recirculating and filtering the solvent in the tank 26 and consists of piping 41 connected to the outlet from the tank 26 and connected to a circulation pump 42 which is connected by piping to the inlet of the filter 44. The output of the filter 44 is connected by piping 46 to the inlet of a heater 47. The outlet of the heater 47 is connected by piping 48 to the inlet to the tank 26. Thus it can be seen that means is provided for filtering the solvent as it is recirculated. in addition, it can be seen that, if desired, the solvent can be heated to a desired temperature to facilitate the removal of the release coating.

If additional activity is required in order to remove the soluble pocket 40, agitation in the form of a mechanical agitation provided by suitable means such as ultrasonic transducers 51 located in the bottom of the tank 26 can be utilized for agitating the solvent. In addition, a mechanical brush agitator 52 can be provided adjacent the roller 36 to engage the exposed surface of the substrate 11 to ensure that the spacer material 45 carried by the soluble pocket 40 is separated from the web or substrate 11. Also jets of the solvent can be provided when needed in the separation process. The jets can be provided by a spray nozzle 54 supplied with solvent from a high pressure pump 56 converted into the piping 48. Before the substrate 11 is wound onto the rewind reel 32, the substrate can be dried by suitable means such as a pair of dryers 57 disposed on opposite sides of the substrate 11 to dry the same prior to the substrate 11 travelling over the roller 37.

With reference to Fig. 3, the optical effects visible to the observer 90 depend on the effective optical thicknesses for imparting color shifting properties to the interference filter 100. An optical thickness is a well known optical parameter defined as the product ηd, where η is the refractive index of the layer and d is the physical thickness of the layer. Typically, the optical thickness of a layer is expressed in terms of a quarter wave optical thickness (QWOT) that is equal to 4 ηd/λ, where λ is the wavelength at which a QWOT condition occurs. The optical thicknesses of the dielectric spacer layer 65 can range from about 2 QWOT at a design wavelength of about 400 nm to about 9 QWOT at a design wavelength of about 700 nm, and preferably 2-6 QWOT at 400-700 nm, depending upon the color shift desired. The thicknesses h₁ and h₂ may be chosen so that to provide two different color shifting effects to the observer 90.

### Example 1

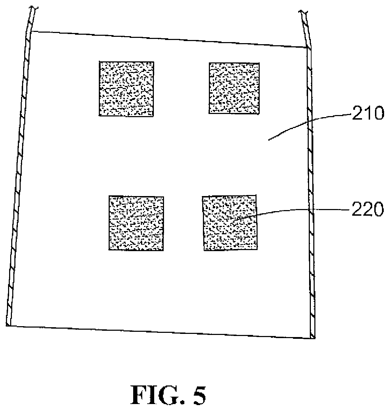

Fig. 5 illustrates an exemplary design produced with the method described above with reference to Figs. 1-3. The spacer layer is thinner in square regions 220 than in a surrounding area 210, which correspond to regions 85 and 80 of Fig. 3, respectively. The squares 220 appear green at near-normal viewing conditions; the color of the squares 220 shifts to red/purple at higher viewing angles. The surrounding area 210 with a thicker spacer layer exhibits red/purple coloration at near-normal viewing angles; the color of the surrounding area 210 shifts to green at higher viewing angles.

To manufacture the sample shown in Fig. 5, a reflector layer formed of 80 nm of Aluminum was deposited onto a PET substrate, exemplifying the reflector 20 and substrate 11 of Fig. 2, respectively. Then an dielectric spacer material MgF₂ was deposited on the reflector layer to the thickness h₁ equal to 6QW MgF2 @ 507nm. The square regions 220 were printed with four different acetone soluble inks on top of the MgF₂ layer; each of the squares is an example of the soluble pocket 40 shown in Fig. 3.

The four acetone soluble inks were:
a/ Water based film former

| | |
|---|---|
| Acrylic film former | 65 |
| Water | 30 |
| Amine | To pH of 8.5 to 9.0 |
| Plasticizer | 3.0 |
| Alcohol | 1.0 |
| Defoamer | 1.0 |

b/ Water based non film former

| | |
|---|---|
| Acrylic non-film former | 60 |
| Water | 35 |
| Amine | To pH of 8.5 to 9.0 |
| Plasticizers | 4 |
| Defoamer | 1 |

c/ Low viscosity/low solid Water based non film former

| | |
|---|---|
| Acrylic non-film former | 35 |
| Water | 60 |
| Amine | To pH of 8.5 to 9.0 |
| Plasticizers | 4 |
| Defoamer | 1 |

d/ Solvent based film former

| | |
|---|---|
| N.P. Acetate | 85 |
| ¼ sec RS Nitrocellulose | 10 |
| Plasticizer | 5 |

The printed inks formed four square-shaped soluble pockets. Further, 75 nm of the spacer material MgF₂ were deposited onto the soluble pockets and the previously deposited spacer material, thereby forming a spacer layer on the reflector.

The spacer layer was modified by rubbing the area with a cotton tip embedded with acetone so as to dissolve the soluble pockets and to remove portions of the spacer material deposited onto the soluble pockets. The result was a spacer layer having a varying layer thickness, as the spacer layer 65 in Fig. 3. After that, an absorber layer formed of 10 nm of Chromium was deposited onto the spacer layer.

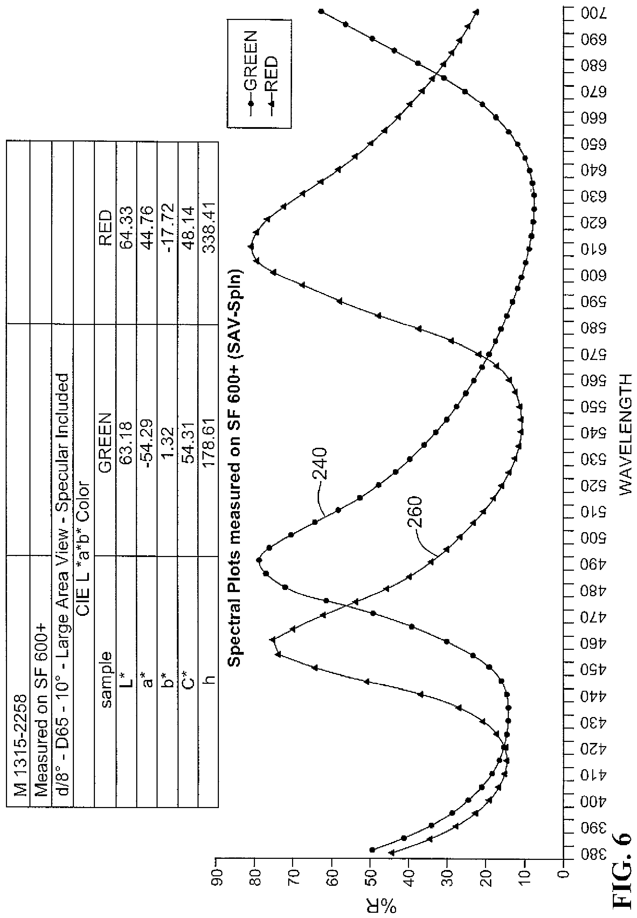

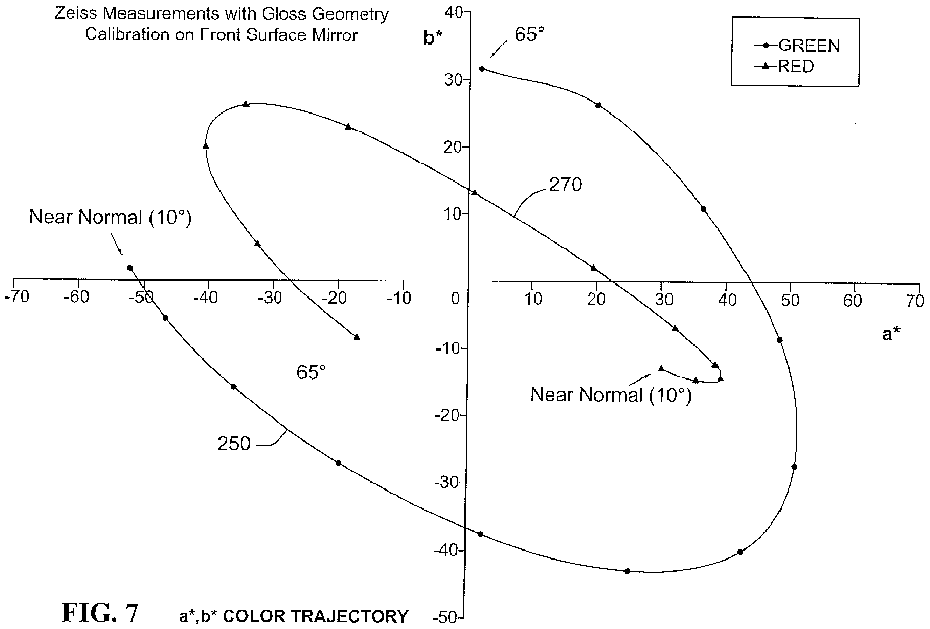

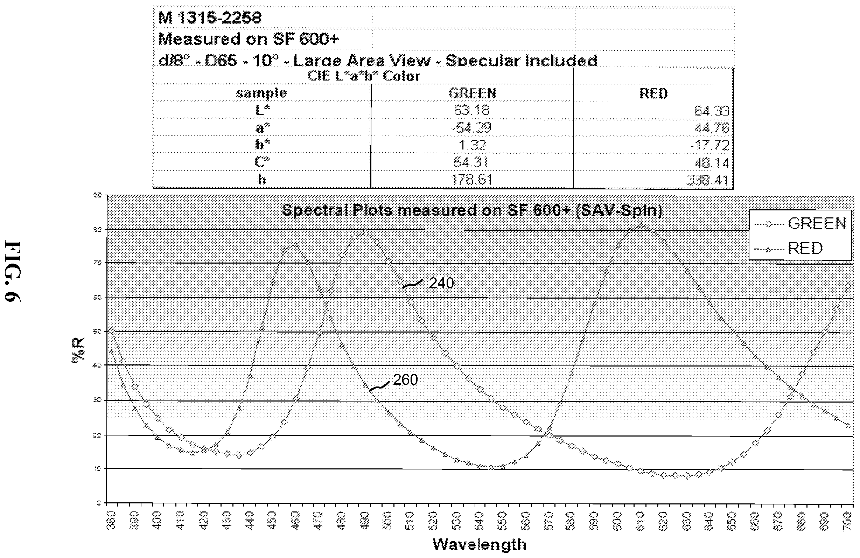

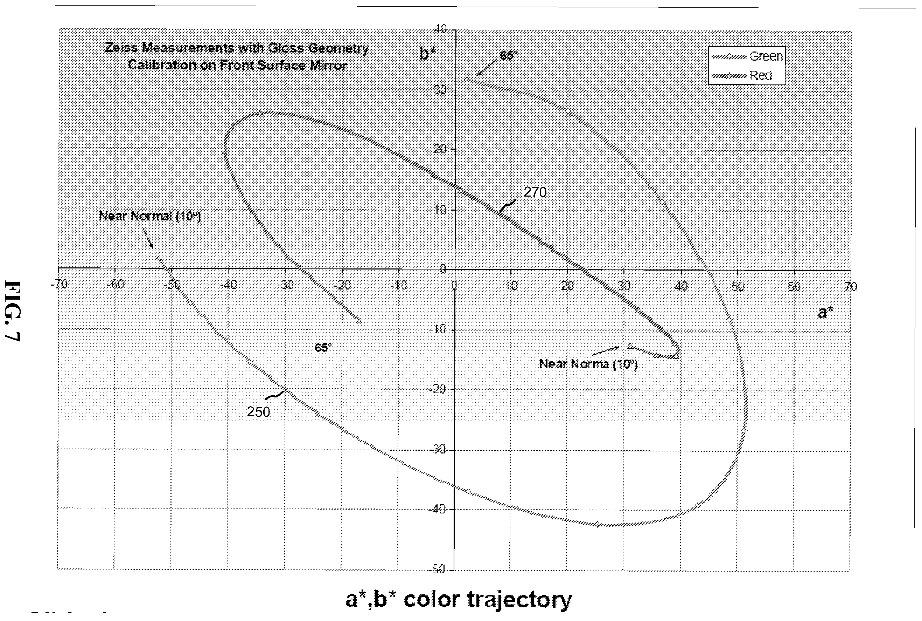

Figs. 6 and 7 provide results of an optical analysis performed with Datacolor SF600 Spectrophotometer and the a*,b* color trajectory measured with a Zeiss instrument. Curves 240 and 250 correspond to the square regions 220, which change in color from green to purple. Curves 260 and 270 correspond to the surrounding area 210, which shift in color from red to green. Fig. 6 shows reflectance as a function of wavelength for the two color shifting areas. The reflectance peaks correspond to greenish and reddish colors for each color shifting design. Fig. 7 shows color trajectories corresponding to the aforedescribed optical designs :
thinner design Al/ 6 QW MgF₂ @507 nm/ 10 nm Cr and
thicker design Al/ 2 QW MgF₂ @577 nm/ 10 nm Cr; the thicker design differs from the thinner design by 70 nm of MgF2.

### Example 2

This example differs from Example 1 in that the spacer materials was chosen SiO₂ deposited to the same thicknesses as MgF₂ in Example 1. The resulting device exhibits blue-to-magenta color shifting squares and green-to-blue background.

In one embodiment the substrate coating step 110 includes providing a substrate which has one or more layers deposited thereon and then coating the substrate with one of a reflector or an absorber layer. The additional layers may be a magnetic layer, a relief-forming layer, a release/hardcoat layer, etc. The release layer may be soluble with a solvent different from one used for dissolving the soluble pocket 40.

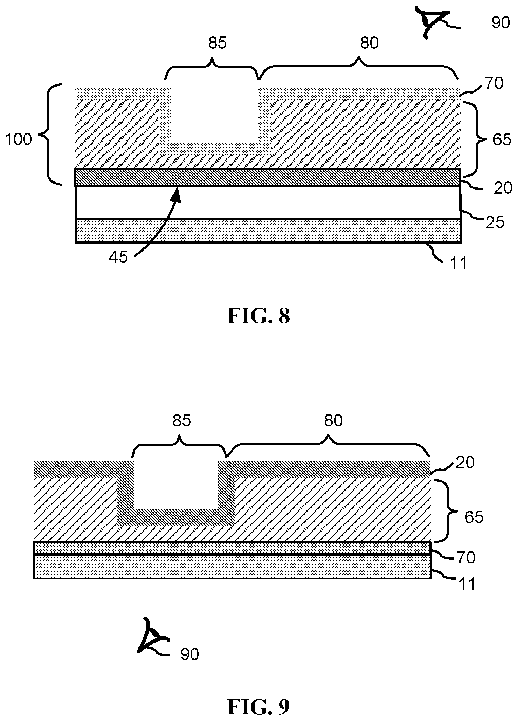

With reference to Fig. 8, the relief forming layer 25 is disposed on the substrate 11. A relief pattern 45 formed in the relief forming layer 25 underlies the interference filter 100. Relative to the method illustrated in Fig. 1, the substrate coating step 110 includes providing a substrate which has a relief forming layer with a relief pattern formed therein and then coating the substrate with one of a reflector or an absorber layer. The methods of forming the relief pattern 45 are known in the art and include embossing, gravure, and casting. Examples of the relief pattern include diffractive, holographic, pyramidal microstructures. The pyramidal microstructures are used for special color by rotation effects described, for example in U.S. Patent Application Pub. No. 20080286501. The relief pattern may be a grating structure with a frequency in the range from 10 grooves/mm to 5000 grooves/mm; the gratings can be of any shape and size, symmetrical or asymmetrical, such as linear, cross, sinusoidal, triangular, square, pyramidal, to create any kind of optical effects such as reflection, diffraction, scattering ,dispersion, etc of the electromagnetic spectrum. The grooves could be sinusoidal, square, triangular, trapezoidal, etc. The relief pattern may be formed in the substrate surface or in an additional layer coated onto the substrate.

### Example 3

This example is different from the design of Example 2 in that the substrate 11 is a grated PET substrate with a 1500 In/mm grating formed of linear sinusoidal grooves. The four inks described on Example 1 were tested; all of them exhibited good patterning properties and provided four squares with a thinner layer of SiO₂ surrounded by a background with a thicker layer of SiO₂. The resulting sample exhibits a combination of thin film and diffractive interference. Different thicknesses of the dielectric spacer layer produce different thin film interference effects as explained above. The diffractive optical effect caused by the grating may be observed when the device is illuminated and viewed across the grooves; and no diffractive effect is observed when the device is viewed parallel to the grooves direction. When the device is viewed across the grooves, a combination of thin film interference and diffractive interference is observed..Accordingly, the method of this invention can be practiced when the substrate has a microstructure thereon.

Another method not comprised in the present invention is similar to one described with reference to Figs. 2 and 3 with the exception that the substrate coating step 110 includes coating the substrate 11 with an absorber layer such as the absorber layer 70, and that the third layer step 140 includes coating the spacer layer 65 with a reflector layer such as the reflector layer 20, as shown in Fig. 9. The resulting device is different from the device 100 in that the positions of the reflector layer 20 and the absorber layer 70 are interchanged. Accordingly, the color-shifting effects are visible through the substrate 11, which is a transparent or at least light transmissible substrate in this case.

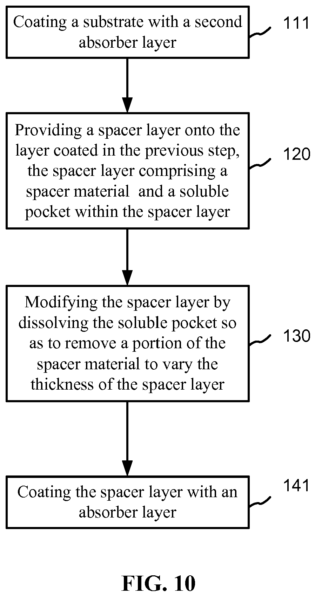

With reference to Fig. 10, the method illustrated in Fig. 1 may be modified to replace the reflector layer 20 with a second absorber layer so as to make the interference filter 100 to be a partially light transmissive interference filter. Accordingly, method steps 120 and 140, coating a reflector layer in one step and an absorber layer in another step, are replaced with steps 121 and 141, both coating an absorber layer. The materials and methods of deposition suitable for the absorber layer 70 are also suitable for the second absorber layer. The substrate 11 may be light transmissive so that color-shifting effects may be observed from both sides of the device. Printed text or any opaque design disposed on one side of the partially light transmissive interference filter, e.g. between the substrate 11 and the second absorber layer, would be visible through the interference filter.

In one embodiment of this invention, different spacer materials are used in a first portion 30 and a second portion 50 of the spacer layer 65. By way of example, one of the spacer materials may have an index of refraction higher than 1.65, a so-called high-index material, and another material may have an index of refraction less than 1.65, a so-called low-index material. In another embodiment, the first and second portions of the spacer layer 65 are formed of a same spacer material.

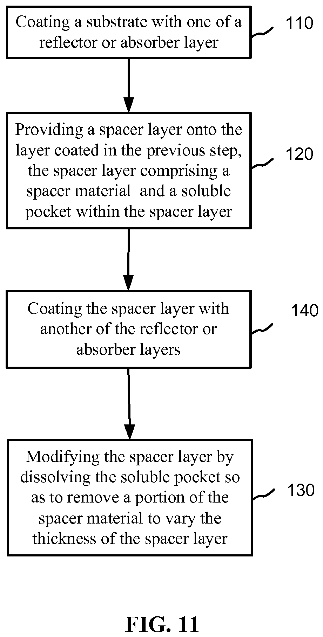

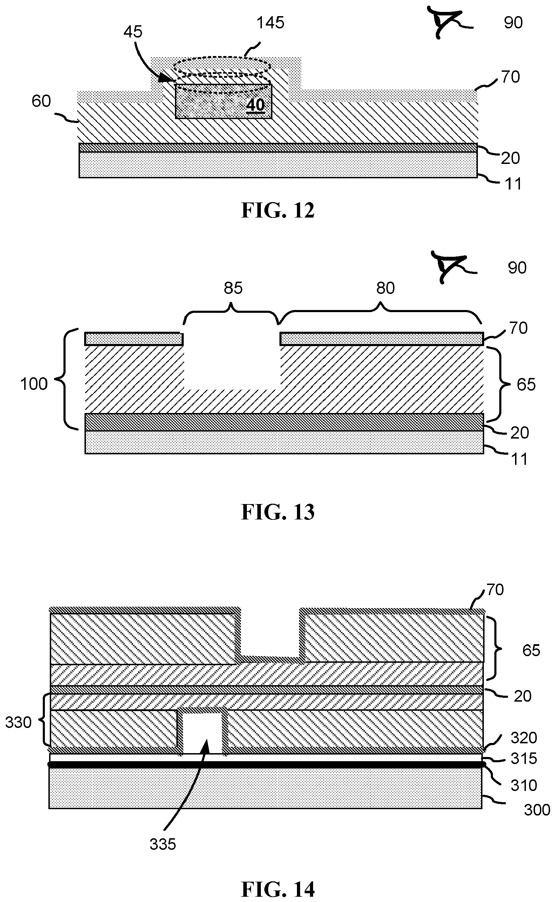

In one embodiment, the modifying step 130 is performed after the third layer step 140, as shown in Fig. 11. The third layer step 140 results in a layered structure shown in Fig. 12, which has the soluble pocket 40 within spacer layer 60. In the modifying step 130, the soluble pocket 40 is dissolved and the adjacent portion of the spacer layer 45 as well as a portion of the absorber layer 145 are removed; the resulting device is shown in Fig. 13; to the observer 90 it provides a color shifting effect in the region 80 and a silver mirror effect in the region 85.

### Example 4

A substrate is coated with Al, then with 6 QW SiO2 @507 nm. After that, four soluble square pockets are printed with soluble ink and 10 nm Cr deposited on top. Finally, the ink is dissolved and the resulting device exhibits silver squares surrounded with a green-to-purple color shifting region.

In one embodiment, the step of includes forming a second soluble pocket within the spacer layer, and wherein the second soluble pocket is dissolved after the third layer deposition step 140. The resulting device provides two different color-shifting effects and a silver mirror effect in the region of the second soluble pocket. The first soluble pocket 40 and the second soluble pocket may be soluble in different solvents, i.e. the first soluble pocket is soluble in a first solvent and the second soluble pocket is soluble in a second solvent and not soluble in the first solvent.

In one embodiment illustrated in Fig. 14, a substrate 300 is coated with a release layer 310, an optional support layer 315 that if used could be microstructured or not, an absorber layer 320, and a spacer layer 330 which includes a dissolvable pocket 335. The dissolvable pocket 335 is dissolved so as to vary the thickness of the spacer layer 330. The resulting structure may replace the substrate 11, e.g. in the method described with reference to Figs. 2 and 3, providing a double-sided optical structure, both sides of which exhibit two different optical effect, such as color-shifting or mirror effects.

In one embodiment, a pattern of soluble ink is applied onto a first side of a transparent substrate and subsequently coated with three consecutives layers of Reflector/Dielectric/Absorber, e.g. such as described in Example 1, and the soluble material is dissolved. By way of example, a Al/ 4 QW MgF2 @530 nm/ 10 nm Cr design provides a green-blue patterned color shifting device. Another three-layered structure of an Absorber/Dielectric/Reflector design, e.g. such as described in Example 2, may be formed on a second side of the substrate. Alternatively, the second side may be coated with colored pigments. At the first side an observer would see two color-shifting effects corresponding to the optical designs of Examples 1 and 2. Additionally, the substrate may be have a pyramidal microstructure formed in the surface of the substrate of in an additional relief forming layer.

In one embodiment, a color-shifting all dielectric stack is formed of a plurality of dielectric layers alternating layers having a high refractive index, i.e. greater than 1.65, and layers having a low index of refraction, i.e. less than 1.65. The layers are arranged in a (LH)ⁿ, (HLH)ⁿ, or (LHL)ⁿ, etc., design. The stack is patterned as described above using one or more soluble pockets in one or more layers so as to create various color-shifting effects. The color-shifting all dielectric stack may be formed directly on a substrate or on a reflector layer. The reflector layer may be a metal reflector as the reflector layer 20 described above or a dielectric mirror formed of multiple thin film layers as known in the art. The substrate may be microstructured as described above.

By way of example, devices manufactured in accordance with the method of this invention may be used for protection of banknotes, value papers, identification documents, access cards, credit cards, gift cards, security labels and packaging, identification plates, security threads, windows, fibers, stamps, labels, stock passports, and the like.

Advantageously, the method of this invention provides high resolution and is easy to adapt to any pattern.

## Claims

1. A method of manufacturing an optical device, the method comprising:
(a) coating a substrate (11) with one of a reflector or absorber layer (20);
(b) providing a spacer layer (60) onto the layer coated in step (a), the spacer layer comprising a spacer material and a first soluble pocket (40) within the spacer layer, by providing a first portion of the spacer material (30), then providing the first soluble pocket, then providing a second portion of the spacer material (50);
(c) modifying the spacer layer by dissolving the first soluble pocket and removing a portion of the spacer material (45) so as to vary the thickness of the spacer layer (65); and,
(d) coating the spacer layer with a metal absorber layer (70);
**characterised in that** the first soluble pocket is provided by printing, and that the metal absorber layer is deposited in a layer that is sufficiently thin so as to allow substantial transmission of light through said layer.

2. A method as defined in claim 1 wherein the substrate (11) has a release coating thereon.

3. A method as defined in claim 1 wherein the substrate (11) provided in step (a) has a relief forming layer with a relief pattern formed therein.

4. A method as defined in claim 1 wherein the substrate (11) provided in step (a) has a microstructured surface.

5. A method as defined in claim 1 wherein the first soluble pocket (40) comprises a water soluble material and wherein step (c) comprises dissolving the first soluble pocket with water.

6. A method as defined in claim 1 wherein the first soluble pocket (40) comprises an acetone soluble material and wherein step (c) comprises dissolving the first soluble pocket with acetone.

7. A method as defined in claim 1 wherein the first soluble pocket (40) comprises an alcohol soluble material and wherein step (c) comprises dissolving the first soluble pocket with alcohol.

8. A method as defined in claim 1 wherein step (d) is performed after step (c).

9. A method as defined in claim 1 wherein step (c) is performed after step (d).

10. A method as defined in claim 1 wherein the spacer layer further (330) comprises a second soluble pocket (335), wherein the first soluble pocket is soluble in a first solvent and the second soluble pocket is soluble in a second solvent and not soluble in the first solvent.

11. A method as defined in claim 1, the method comprising:
(a) coating a substrate with a first absorber layer (111);
(b) providing a spacer layer (60) onto the first absorber layer, the spacer layer comprising a spacer material and a soluble pocket (40) within the spacer layer, by providing a first portion of the spacer material (30), then printing the first soluble pocket, then providing a second portion of the spacer material (50);
(c) modifying the spacer layer by dissolving the soluble pocket and removing a portion of the spacer material so as to vary the thickness of the spacer layer (65); and,
(d) coating the spacer layer with a second absorber layer (141).

## Patentansprüche

1. Ein Verfahren zum Herstellen einer optischen Vorrichtung, wobei das Verfahren Folgendes beinhaltet:
(a) Beschichten eines Substrats (11) mit einem von einem Reflektor oder einer Absorberschicht (20);
(b) Bereitstellen einer Abstandshalterschicht (60) auf der in Schritt (a) beschichteten Schicht, wobei die Abstandshalterschicht ein Abstandshaltermaterial und eine erste lösliche Aussparung (40) innerhalb der Abstandshalterschicht beinhaltet, durch Bereitstellen eines ersten Teils des Abstandshaltermaterials (30), dann Bereitstellen der ersten löslichen Aussparung, dann Bereitstellen eines zweiten Teils des Abstandshaltermaterials (50);
(c) Modifizieren der Abstandshalterschicht durch Auflösen der ersten löslichen Aussparung und Entfernen eines Teils des Abstandshaltermaterials (45), um die Dicke der Abstandshalterschicht (65) zu verändern; und
(d) Beschichten der Abstandshalterschicht mit einer Metallabsorberschicht (70);
**dadurch gekennzeichnet, dass** die erste lösliche Aussparung durch Drucken bereitgestellt wird und dass die Metallabsorberschicht in einer Schicht hinterlegt wird, die ausreichend dünn ist, um eine wesentliche Durchlässigkeit von Licht durch die Schicht zu erlauben.

2. Verfahren gemäß Anspruch 1, wobei das Substrat (11) eine Trennbeschichtung darauf aufweist.

3. Verfahren gemäß Anspruch 1, wobei das in Schritt (a) bereitgestellte Substrat (11) eine reliefbildende Schicht mit einem darin gebildeten Reliefmuster aufweist.

4. Verfahren gemäß Anspruch 1, wobei das in Schritt (a) bereitgestellte Substrat (11) eine mikrostrukturierte Oberfläche aufweist.

5. Verfahren gemäß Anspruch 1, wobei die erste lösliche Aussparung (40) ein wasserlösliches Material beinhaltet und wobei Schritt (c) das Auflösen der ersten löslichen Aussparung mit Wasser beinhaltet.

6. Verfahren gemäß Anspruch 1, wobei die erste lösliche Aussparung (40) ein acetonlösliches Material beinhaltet und wobei Schritt (c) das Auflösen der ersten löslichen Aussparung mit Aceton beinhaltet.

7. Verfahren gemäß Anspruch 1, wobei die erste lösliche Aussparung (40) ein alkohollösliches Material beinhaltet und wobei Schritt (c) das Auflösen der ersten löslichen Aussparung mit Alkohol beinhaltet.

8. Verfahren gemäß Anspruch 1, wobei Schritt (d) nach Schritt (c) durchgeführt wird.

9. Verfahren gemäß Anspruch 1, wobei Schritt (c) nach Schritt (d) durchgeführt wird.

10. Verfahren gemäß Anspruch 1, wobei die Abstandshalterschicht (330) ferner eine zweite lösliche Aussparung (335) beinhaltet, wobei die erste lösliche Aussparung in einem ersten Lösungsmittel löslich ist und die zweite lösliche Aussparung in einem zweiten Lösungsmittel und nicht in dem ersten Lösungsmittel löslich ist.

11. Verfahren gemäß Anspruch 1, wobei das Verfahren Folgendes beinhaltet:
(a) Beschichten eines Substrats mit einer ersten Absorberschicht (111);
(b) Bereitstellen einer Abstandshalterschicht (60) auf der ersten Absorberschicht, wobei die Abstandshalterschicht ein Abstandshaltermaterial und eine lösliche Aussparung (40) innerhalb der Abstandshalterschicht beinhaltet, durch Bereitstellen eines ersten Teils des Abstandshaltermaterials (30), dann Drucken der ersten löslichen Aussparung, dann Bereitstellen eines zweiten Teils des Abstandshaltermaterials (50);
(c) Modifizieren der Abstandshalterschicht durch Auflösen der löslichen Aussparung und Entfernen eines Teils des Abstandshaltermaterials, um die Dicke der Abstandshalterschicht (65) zu verändern; und
(d) Beschichten der Abstandshalterschicht mit einer zweiten Absorberschicht (141).

## Revendications

1. Un procédé de fabrication d'un dispositif optique, le procédé comprenant :
(a) le revêtement d'un substrat (11) avec soit une couche de réflecteur soit une couche d'absorbeur (20) ;
(b) la fourniture d'une couche d'espaceur (60) sur la couche revêtue dans l'étape (a), la couche d'espaceur comprenant un matériau espaceur et une première poche soluble (40) au sein de la couche d'espaceur, en fournissant une première partie du matériau espaceur (30), puis en fournissant la première poche soluble, puis en fournissant une deuxième partie du matériau espaceur (50) ;
(c) la modification de la couche d'espaceur en dissolvant la première poche soluble et en retirant une partie du matériau espaceur (45) pour faire varier l'épaisseur de la couche d'espaceur (65) ; et,
(d) le revêtement de la couche d'espaceur avec une couche d'absorbeur en métal (70) ;
**caractérisé en ce que** la première poche soluble est fournie par impression, et que la couche d'absorbeur en métal est déposée en une couche qui est suffisamment fine pour permettre une transmission substantielle de lumière à travers ladite couche.

2. Un procédé tel que défini dans la revendication 1 dans lequel le substrat (11) a un revêtement de libération sur celui-ci.

3. Un procédé tel que défini dans la revendication 1 dans lequel le substrat (11) fourni dans l'étape (a) a une couche formant relief avec un motif en relief formé à l'intérieur.

4. Un procédé tel que défini dans la revendication 1 dans lequel le substrat (11) fourni dans l'étape (a) a une surface microstructurée.

5. Un procédé tel que défini dans la revendication 1 dans lequel la première poche soluble (40) comprend un matériau soluble dans l'eau et dans lequel l'étape (c) comprend la dissolution de la première poche soluble avec de l'eau.

6. Un procédé tel que défini dans la revendication 1 dans lequel la première poche soluble (40) comprend un matériau soluble dans l'acétone et dans lequel l'étape (c) comprend la dissolution de la première poche soluble avec de l'acétone.

7. Un procédé tel que défini dans la revendication 1 dans lequel la première poche soluble (40) comprend un matériau soluble dans l'alcool et dans lequel l'étape (c) comprend la dissolution de la première poche soluble avec de l'alcool.

8. Un procédé tel que défini dans la revendication 1 dans lequel l'étape (d) est réalisée après l'étape (c).

9. Un procédé tel que défini dans la revendication 1 dans lequel l'étape (c) est réalisée après l'étape (d).

10. Un procédé tel que défini dans la revendication 1 dans lequel la couche d'espaceur (330) comprend en outre une deuxième poche soluble (335), dans lequel la première poche soluble est soluble dans un premier solvant et la deuxième poche soluble est soluble dans un deuxième solvant et n'est pas soluble dans le premier solvant.

11. Un procédé tel que revendiqué dans la revendication 1, le procédé comprenant :
(a) le revêtement d'un substrat avec une première couche d'absorbeur (111) ;
(b) la fourniture d'une couche d'espaceur (60) sur la première couche d'absorbeur, la couche d'espaceur comprenant un matériau espaceur et une poche soluble (40) au sein de la couche d'espaceur, en fournissant une première partie du matériau espaceur (30), puis en imprimant la première poche soluble, puis en fournissant une deuxième partie du matériau espaceur (50) ;
(c) la modification de la couche d'espaceur en dissolvant la poche soluble et en retirant une partie du matériau espaceur pour faire varier l'épaisseur de la couche d'espaceur (65) ; et,
(d) le revêtement de la couche d'espaceur avec une deuxième couche d'absorbeur (141) ;
